Europäisches Patentamt

European Patent Office

Office européen des brevets

(11) Veröffentlichungsnummer: **0 267 324 B1**

(12) **EUROPÄISCHE PATENTSCHRIFT**

(45) Veröffentlichungstag der Patentschrift: **15.01.92**

(21) Anmeldenummer: **86116150.3**

(22) Anmeldetag: **21.11.86**

(51) Int. Cl.⁵: **G01M 1/02**, G01M 1/16

(54) **Unwuchtmessstation.**

(30) Priorität: **08.11.86 DE 3638158**

(43) Veröffentlichungstag der Anmeldung:
**18.05.88 Patentblatt 88/20**

(45) Bekanntmachung des Hinweises auf die
Patenterteilung:
**15.01.92 Patentblatt 92/03**

(84) Benannte Vertragsstaaten:
**BE DE ES FR GB IT NL SE**

(56) Entgegenhaltungen:
**US-A- 3 038 342**
**US-A- 3 091 970**
**US-A- 3 236 995**

(73) Patentinhaber: **CARL SCHENCK AG**
**Landwehrstrasse 55 Postfach 40 18**
**W-6100 Darmstadt(DE)**

(72) Erfinder: **Schönfeld, Harald**
**Aumühlenweg 1**
**W-6100 Darmstadt(DE)**
Erfinder: **Jarschel, Rainer**
**Thüringer Strasse 46**
**W-6073 Egelsbach(DE)**
Erfinder: **Frank, Helmut**
**Groschlagweg 35**
**W-6110 Dieburg(DE)**

(74) Vertreter: **Brandt, Ernst-Ulrich**
**Fa. Carl Schenck AG Patentabteilung Land-**
**wehrstrasse 55 Postfach 40 18**
**W-6100 Darmstadt 1(DE)**

## Beschreibung

Die Erfindung bezieht sich auf eine Unwuchtmeßstation und auf ein Verfahren zur Unwuchtmessung.

Aus der US-A-3,235,073 ist es bekannt, einen auszuwuchtenden Rotor mittels einer im wesentlichen horizontal angeordneten Transporteinrichtung einer Unwuchtmeßstation zuzuführen. In der Unwuchtmeßstation wird die auszugleichende Unwucht ermittelt, so daß der Rotor anschließend ausgewuchtet werden kann. Zum Transport zur und zur Einlagerung des Rotors in die Meßstation ist eine Einrichtung vorgesehen, die zwei parallel beiderseits des Rotors angeordnete Stangen aufweist, an denen mehrere Paare von Fingern zur Abstützung des Rotors befestigt sind. Die Stangen sind synchron in eine Lage schwenkbar, in der die Finger waagerecht stehen. Infolge Anhebens der beiden Stangen greifen die beiden Finger eines Fingerpaares unter den außerhalb der Unwuchtmeßstation liegenden Rotor und stützen ihn ab. Die beiden Stangen führen nun eine Translationsbewegung aus, mit der der Rotor in die Unwuchtmeßstation eingeführt und unter Absenken der Stangen auf einer Lagereinrichtung einer Meßeinrichtung positioniert wird. Die Stangen werden anschließend in eine Lage geschwenkt, in der die Finger nach unten zeigen und danach in einer Translationsbewegung in ihre Ausgangslage zurückbewegt. In einem anschließenden Arbeitszyklus wird mit dem zurückbewegten Fingerpaar ein nachfolgender Rotor in die Meßstation eingefahren, während gleichzeitig der ausgemessene Rotor mit einem zweiten Fingerpaar aus der Meßstation heraustransportiert und an einer durch den Translationshub bestimmten Stelle abgesetzt wird. Bei einer derart ausgebildeten Transport- und Einlagerungseinrichtung müssen die über einen Rollengang zugeführten Rotoren vereinzelt und in eine genau festgelegte Startposition für das Transport- und Einlagerungssystem der Meßstation gebracht werden. Die derart ausgebildete Transport- und Einlagerungseinrichtung gestattet es nicht, die Auswuchtanlage im Verlauf eines eine gesamte Fertigungslinie durchlaufenden Transfersystems einzusetzen. Der komplizierte Bewegungsablauf führt darüber hinaus zu einer aufwendigen Ausbildung.

Aus der US-A-3,236,995 ist eine Auswuchtanlage bekannt, die zwei parallel verlaufende, zur Horizontalen geneigte Schienen aufweist, auf denen ein Rotor mit seinen Lagerzapfen unter Einwirkung der Schwerkraft in Richtung auf die Eingangsstation der Auswuchtanlage abrollt bzw. von der Ausgangsstation wegrollt. In der Eingangsstation wird der Rotor gestoppt und nachfolgend mittels einer Transporteinrichtung einer Meßstation zugeführt. Der Transport zwischen einzelnen Stationen der Auswuchtanlage wird mit einem Greifersystem durchgeführt, das zwischen zwei auf den Abstand der Stationen abgestimmten Endlagen translatorisch vor- und zurückbewegbar ist. Auch diese Anlage ist aufwendig ausgeführt und zum Einsatz an einem durchlaufenden einfachen Transfersystem nicht vorgesehen.

Ausgehend von diesem Stand der Technik liegt der Erfindung die Aufgabe zugrunde, die Einlagerung des Rotors in eine Unwuchtmeßstation zu vereinfachen und eine einfach ausgebildete Unwuchtmeßstation zu schaffen, die ohne aufwendige Anpaßmaßnahmen an einem einfach gestalteten Transfersystem einsetzbar ist.

Erfindungsgemäß wird diese Aufgabe entsprechend Anspruch 1 oder Anspruch 14 gelöst.

In vorteilhafter Weise entfällt eine der Unwuchtmeßstation eigene Transporteinrichtung, da der Rotor auf der Transporteinrichtung des Transfersystems die Meßstation durchläuft. Der Rotor ist für die Unwuchtmeßeinrichtung, die mit ihren mit dem Rotor zusammenwirkenden Teilen wie Lagereinrichtung, Einrichtung zur Drehbewegung, einem oder mehreren Meßumformern und gegebenenfalls einer Einrichtung zur Erzeugung des Bezugssignals oberhalb einer Fläche, in der die Bewegungsbahn der Transporteinrichtung verläuft, angeordnet ist, ohne Zwischenschaltung von Umlagerungseinrichtungen, also direkt, zugänglich. Die Unwuchtmeßstation kann dabei z. B. portalartig ein schrittweise bewegtes Transfersystem, vorzugsweise ein Transportband oder eine Transportkette, das Rotoren trägt, umgreifen. Es kann jedoch auch eine Anordnung der Unwuchtmeßeinrichtung seitlich der Transport- bzw. Transfereinrichtung oder seitlich ihrer Mitte vorgesehen werden. Die Transporteinrichtung kann als Längstransfer- oder als Rundtransfereinrichtung ausgeführt sein. Die Transportrichtung bzw. -einrichtung kann unter beliebigem Winkel zur Horizontalebene liegen, insbesondere auch in einem rechten Winkel zur Horizontalebene oder in der Horizontalebene. Die Transportrichtung bzw. -einrichtung kann auch einem gekrümmten Verlauf aufweisen; in diesem Fall umfaßt die Fläche, in der die Bewegungsbahn der Transporteinrichtung verläuft, beispielsweise einen Teil der Mantelfläche eines zylindrischen Körpers.

In einer vorteilhaften Ausführungsform der Erfindung ist vorgesehen, daß die Transporteinrichtung im wesentlichen horizontal angeordnet ist und die Unwuchtmeßeinrichtung oberhalb einer Ebene, in der die Bewegungsbahn des Rotors verläuft, angeordnet ist. Die Bewegungsbahn des Rotors ist begrenzt durch den in Transportrichtung bewegten Umriß des Rotors in Transportrichtung. Diese Ausführungsform erweist sich als vorteilhaft, da die eine gesamte Fertigungslinie durchlaufende Transport-bzw. Transfereinrichtung im wesentlichen in einer Horizontalebene angeordnet werden kann.

Eine Unwuchtmeßstation mit geringer Breitenabmessung erreicht man durch Anordnung der kopfstehenden Unwuchtmeßeinrichtung im wesentlichen vertikal oberhalb einer Stelle der im wesentlichen horizontal verlaufenden Bewegungsbahn des Rotors.

Besonders vorteilhaft ist eine Ausführung, bei der die Transporteinrichtung einen als Transportpalette ausgebildeten Rotorträger aufweist, da insbesondere bei einem Band- oder Kettentransport der Paletten einfach zu steuernde Verzweigungen des Werkstückflusses möglich sind. Auch können der Unwuchtmeßeinrichtung verschiedenartige Rotoren auf vorteilhaft gleiche Außenabmessungen aufweisenden Transportpaletten zugeleitet werden. Desweiteren können gegebenenfalls Transportpaletten mit Eigenantrieb eingesetzt werden, was insbesondere bei größeren Rotoren vorteilhaft ist. Der Eigenantrieb der Transportpaletten kann dabei derart gesteuert werden, daß die Palette in genau bestimmter Position z. B. unterhalb bzw. der Unwuchtmeßeinrichtung gegenüberliegend zum Stillstand kommt.

Eine besonders vorteilhafte Ausgestaltung der Erfindung sieht vor, daß als Einrichtung zur Drehbewegung des Rotors und/oder zur Einlagerung des Rotors in die Lagereinrichtung ein Magnetfeldsystem vorgesehen ist. Das Magnetfeldsystem kann dabei zur vollständigen Steuerung der Drehbewegung des Rotors, d. h. zu seiner Beschleunigung, zum Antrieb in einer Phase konstanter Geschwindigkeit und zu seiner Abbremsung dienen. Bezüglich der Einlagerung dient das Magnetfeldsystem zum Bewegen des Rotors bis zur Anlage an der Lagereinrichtung. Eine Ausgestaltung, bei der mit dem Magnetfeldsystem ein Drehfeld und/oder ein Gleichfeld erzeugbar ist, bietet insbesondere bei einem offenen Drehfeld Vorteile hinsichtlich der Einlagerung des Rotors. Da der Rotor dabei nicht nur durch tangentiale Kräfte gedreht, sondern auch durch radiale Kräfte in das Feld hineingezogen wird, ist eine sichere Lagerung trotz wirkender Gewichtskraft ohne zusätzliche, unterhalb des Rotors nach dem Einlagern anzuordnende Stützeinrichtungen gewährleistet. Die Lagereinrichtung kann dabei vorteilhaft Rollen- oder Gleitlager aufweisen oder zur Aufnahme der Betriebslager des Rotors ausgebildet sein.

Eine Weiterbildung der Erfindung sieht vor, daß der Transport schrittweise erfolgt und daß die Lagereinrichtung und der Rotor bei der Einlagerung einen Abstand zueinander aufweisen, der kleiner ist als der bei Beendigung des Transportschrittes. Der Einlagerungshub kann so vorteilhaft in einen ersten Abschnitt, nämlich den Hub von der Transportposition in eine Näherungsposition, und einen zweiten kleineren Abschnitt, nämlich den Hub von der Näherungsposition in die Einlagerungsposition, aufgeteilt werden. Dies ist besonders vorteilhaft bei einer Einlagerung des Rotors in die Lagereinrichtung mit Hilfe eines Magnetfeldes, da der geringe Abstand zwischen Lagereinrichtung und Rotor nur eine kleine Magneteinrichtung erforderlich macht. Zweckmäßig kann zur Einstellung des Abstandes bzw. zur Einlagerung des Rotors eine Hubeinrichtung für den Rotor vorgesehen sein. Alternativ oder zusätzlich kann vorgesehen werden, daß zur Einstellung des Abstandes bzw. zur Einlagerung des Rotors eine Absenkeinrichtung für die Unwuchtmeßeinrichtung oder Teile der Unwuchtmeßeinrichtung vorgesehen ist. Die Hubeinrichtung kann den gesamten Einlagerungshub ausführen; es kann jedoch auch vorgesehen werden, daß der Einlagerungshub auf Hubeinrichtung und Absenkeinrichtung aufgeteilt wird.

Gemäß einer Weiterbildung der Erfindung mit einfachem Aufbau ist vorgesehen, daß die Drehachse des Rotors horizontal liegt.

Zweckmäßigerweise sind mechanische Mittel wie Riemenantrieb, Antrieb durch Strömungsmittel oder Rollenantrieb zur Drehbewegung des Rotors und mit den Stützrollen zusammenwirkende Gegendruckrollen vorgesehen.

Vorteilhaft ist auch eine Ausführungsform, bei der die Drehachse eines im wesentlichen scheibenförmigen Rotors vertikal liegt und die Unwuchtmeßeinrichtung eine einfache Lagereinrichtung in Form einer vertikalen Spindel aufweist, die als Drehspindel zugleich die Drehbewegung des Rotors bewirken kann.

In einer weiteren Ausgestaltung der Erfindung ist die Unwuchtmeßstation Teil einer Auswuchtanlage mit die Bewegungsbahn des Rotors portalartig umgebenden Meß-und/oder Bearbeitungsstationen.

Ausführungsformen der Erfindung sind in der Zeichnung schematisch dargestellt und werden im folgenden näher beschrieben.

Es zeigen:

Fig. 1     eine Seitenansicht einer Auswuchtanlage

Fig. 2     die Ansicht einer Unwuchtmeßstation mit Transportpaletten als Rotorträger in Bewegungsrichtung der Transporteinrichtung

Fig. 3     eine Unwuchtmeßstation für scheibenförmige Rotoren in einer Ansicht in Bewegungsrichtung der Transporteinrichtung

Einander entsprechende Bauteile sind in den Figuren mit gleichen Bezugszeichen versehen.

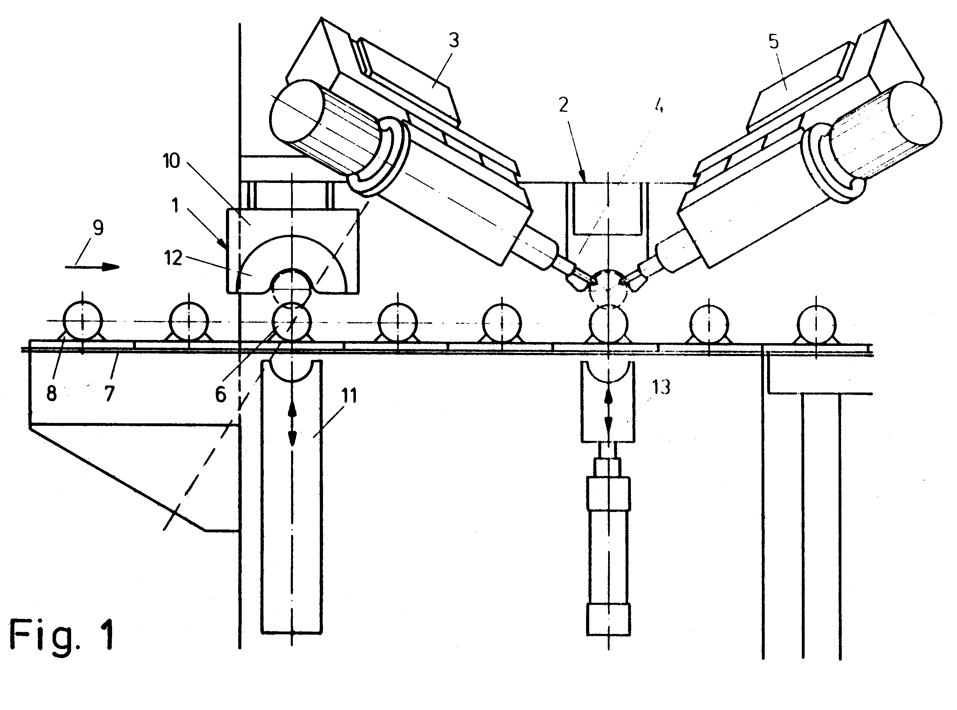

In Figur 1 ist eine Unwuchtmeßstation 1 schematisch als Teil einer Auswuchtanlage dargestellt. Der Unwuchtmeßstation 1 ist eine Ausgleichsstation 2 mit Einrichtungen 3 und 5 zum Abtragen bzw. Auftragen von Material an Ausgleichsstellen des auszuwuchtenden Rotors 6 nachgeordnet. Die auszumessenden bzw. auszuwuchtenden Rotoren 6 werden der Unwuchtmeßstation 1 auf einer in einer Horizontalebene verlaufenden Längstransferstraße, die als Transferband 7 ausgebildet ist, zugeführt, durchlaufen die Unwuchtmeßstation 1 und gelangen anschließend zur Ausgleichsstation 2.

Das Transferband 7 ist mit äquidistant angeordneten Rotorträgern 8 versehen, die den Rotor 6 sowohl in der durch den Pfeil 9 definierten horizontalen Transportrichtung als auch orthogonal dazu in Richtung seiner Drehachse, die quer zur Transportrichtung und horizontal liegt, fixieren. Das Transferband 7 transportiert die Rotoren 6 in einer Horizontalebene schrittweise mit einer Schrittlänge, die dem Abstand der Rotorträger 8 auf dem Transferband 7 entspricht. Das Transferband 7 mit den Rotorträgern 8 durchläuft die Auswuchtanlage mit der Meßstation 1 und der Ausgleichsstation 2. Hinter der Ausgleichsstation 2 kann bei Bedarf eine weitere, prinzipiell wie die Unwuchtmeßstation 1 ausgebildete Unwuchtmeßstation vorgesehen werden, mit der die Güte des Unwuchtausgleichs überprüft bzw. eine eventuell vorhandene Restunwucht festgestellt werden kann; in diesem Falle durchläuft das Transferband 7 auch diese weitere Unwuchtmeßstation.

In einem Transferschritt wird der auszumessende Rotor 6 in die Unwuchtmeßstation 1 eingebracht und steht am Ende des Transferschrittes einer Unwuchtmeßeinrichtung 10 und einer Hubeinrichtung 11 fluchtend gegenüber.

Die Unwuchtmeßeinrichtung 10 umfaßt eine nicht näher dargestellte Lagereinrichtung für den Rotor 6, eine Einrichtung zur Drehbewegung des Rotors 6, in dem dargestellten Ausführungsbeispiel in Form eines offenen Magnetfeldsystems 12, mit dem ein Drehfeld erzeugbar ist, zwei Meßumformer, die Wirkungen der Unwucht erfassen, eine Einrichtung zur Erzeugung eines Bezugssignals sowie eine Auswerteeinrichtung, die aus den Meßsignalen und den Bezugssignalen die Unwucht ermittelt. Aufbau und Wirkungsweise einer derartigen Unwuchtmeßeinrichtung im Zusammenwirken mit einem Rotor mit ausgeprägten Polen sind prinzipiell beispielsweise der US-Patentschrift 3,038,342 zu entnehmen und werden deshalb hier nicht nochmals näher erläutert.

Die Unwuchtmeßeinrichtung 10 ist im wesentlichen, d. h. mit ihren mit dem Rotor 6 zusammenwirkenden Teilen wie Lagereinrichtung, Magnetfeldsystem 12, Meßumformern und Bezugssignaleinrichtung oberhalb einer Stelle der in einer Horizontalebene verlaufenden Bewegungsbahn des Rotors 6 angeordnet, wobei zumindest die Mitten der Lagereinrichtung und des Magnetfeldsystems 12 in der durch die Rotorachse des nach Beendigung des Transferschrittes stillstehenden Rotors 6 definierten Vertikalebene liegen.

Als Lagereinrichtung für den Rotor 6 finden nicht näher dargestellte, den Rotorzapfen zugeordnete Stützrollensätze Verwendung. Das offene Magnetfeldsystem 12 ist mit seiner Öffnung dem Rotor 6 zugewandt und umschließt bei einem von unten in die Lagereinrichtung eingelagerten Rotor 6 den Bereich des Rotors 6 mit den ausgeprägten Polen im wesentlichen halbkreisförmig. Infolge der Erzeugung eines offenen Drehfelds wirken neben tangentialen Kräften zur Drehbewegung auch radiale Kräfte auf den Rotor 6, die den Rotor 6 entgegen der Schwerkraft in das Feld und damit in die Lagereinrichtung hineinziehen.

Die Hubeinrichtung 11 liegt unterhalb der Bewegungsbahn des Rotorträgers 8 bzw. des Transferbandes 7 in einer durch die Rotorachse des stillstehenden Rotors 6 definierten Vertikalebene. Die Hubeinrichtung 11 wird bei Stillstand des Transferbandes 7 aus einer Ruhelage, in der sie aus der Bewegungsbahn des Transferbandes 7 zurückgezogen ist, in Kontakt mit dem Rotor 6 und weiter unter Abheben des Rotors 6 von dem Rotorträger 8 zur Einlagerung des Rotors 6 in der zugeordneten Lagereinrichtung in Richtung dieser Lagereinrichtung verschoben. Die Verschiebebewegung wird beendet, wenn der Rotor 6 einen geringen Abstand zu den Stützrollen der Lagereinrichtung aufweist. Die Zurücklegung des restlichen Einlagerungshubs bis zum Kontakt der Lagerzapfen des Rotors 6 mit den Stützrollen wird durch ein auf den Rotor 6 einwirkendes Magnetfeld bewirkt, das während dieses Hubes als Gleichfeld ausgebildet ist oder gegebenenfalls einen hohen Gleichfeldanteil aufweist. In diesem Fall ist das Magnetfeldsystem 12 zur Erzeugung eines Drehfeldes und eines Gleichfeldes während des Hubes und während des Meßlaufs ausgelegt. Unter Umständen kann eine Einlagerung auch durch das offene Drehfeld allein bewirkt werden. Da der Rotor 6 mittels der Hubeinrichtung 11 nahe an die Lagereinrichtung gebracht wurde, kann das Magnetfeldsystem 12 kompakt gestaltet werden.

Nach Durchführung des Meßlaufs wird der Rotor 6 auf die Hubeinrichtung 11 abgesenkt und diese in ihre Ruheposition verschoben, wodurch der Rotor 6 auf dem Rotorträger 8 abgesetzt wird. Mit dem folgenden Transferschritt wird der Rotor 6 auf die Ausgleichsstation 2 zubewegt, während der auf dem Transferband 7 folgende Rotor in die Unwuchtmeßstation 1 eingebracht wird.

Die Ausgleichsstation 2 weist neben den Einrichtungen 3 und 5 eine Haltevorrichtung auf. Das Halteelement 13 dieser Vorrichtung ist in der Ruhelage unterhalb der Bewegungsbahn des Rotorträgers 8 bzw. des Transferbandes 7 angeordnet und wirkt mit einem Anschlagelement 4 zusammen, das oberhalb der Bewegungsbahn angeordnet ist. Nach Stillstand des Transferbandes 7 wird das Halteelement 13 auf das Anschlagelement 4 zubewegt, so daß schließlich zwischen diesen Elementen der vom Halteelement 13 mitgenommene auszugleichenden Rotor 6 eingespannt ist. Nach dem Ausgleichsvorgang wird das Halteelement 13 vor dem nächsten Transferschritt in seine Ruhepositionen zurückbewegt, wobei der Rotor 6 auf dem Rotorträger 8 abgesetzt wird.

Die Taktzeit des Transferbandes 7 wird bei unterschiedlicher Dauer der beiden Vorgänge (Meßvorgang und Ausgleichsvorgang) durch den länger dauernden Vorgang bestimmt.

Es liegt im Rahmen der Erfindung, daß z. B. aus Platzgründen anstelle der in Fig. 1 dargestellten Anordnung von Hubeinrichtung 11 und Unwuchtmeßeinrichtung 10 in einer durch die Rotorachse definierten Vertikalebene auch eine Anordnung in einer zur Vertikalebene geneigten, die Rotorachse aufnehmenden Ebene vorgesehen werden kann; dies sei durch die in Fig. 1 gestrichelt dargestellte Gerade durch den Rotormittelpunkt angedeutet. In diesem Fall ist die Achse der Unwuchtmeßeinrichtung 10 gegenüber der Rotorachse des stillstehenden Rotors 6 in Transportrichtung versetzt und die Unwuchtmeßeinrichtung 10 und die Hubeinrichtung 11 sind in der geneigten Ebene angeordnet. Die Bewegung der Hubeinrichtung erfolgt in Richtung der gestrichelt dargestellten Geraden.

Es liegt ferner im Rahmen der Erfindung, die horizontal liegende Rotorachse nicht, wie in Fig. 1 dargestellt, quer zu der durch den Pfeil 9 gekennzeichneten Transporteinrichtung, sondern - um 90˚ gedreht - parallel zur Transportrichtung anzuordnen. Auch in diesem Fall können die entsprechend gedrehte Unwuchtmeßeinrichtung 10 und die entsprechend gedrehte Hubeinrichtung 11 in einer zur Vertikalebene geneigten, die Rotorachse aufnehmenden Ebene angeordnet werden. Bei mittiger Anordnung des Rotors 6 auf der Transporteinrichtung 7 liegt die Unwuchtmeßeinrichtung 10 ebenso wie die Hubeinrichtung 11 dann seitlich der Mitte der Transporteinrichtung 7 bzw. seitlich der Transporteinrichtung 7, gesehen in Transportrichtung.

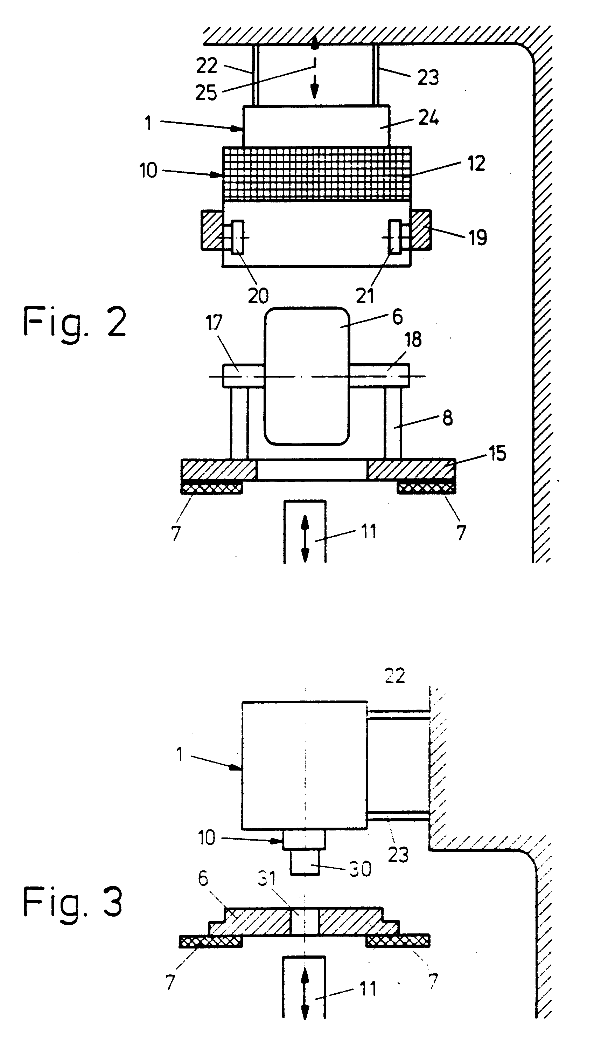

Der in Figur 2 dargestellten Unwuchtmeßstation 1 werden die auszumessenden Rotoren 6 über ein in einer Horizontalebene laufendes Transferband 7 zugeführt. Jeder Rotor 6 ist in der dargestellten Ausführungsform in einem als Transportpalette 15 ausgebildeten Rotorträger 8 gelagert. Die Transportpaletten 15 sind auf dem Transferband 7 abgestützt, und werden in Bewegungsrichtung des Transferbandes 7 mitgenommen. Die Transportpaletten 15 durchlaufen die Meßstation 1 und gegebenenfalls weitere Stationen einer Auswuchtanlage wie Ausgleichsstation und zweite Meßstation.

Der Rotor weist Lagerzapfen 17, 18 auf, mit denen er in einer Lagereinrichtung 19 der Unwuchtmeßeinrichtung 10 in Form von Stützrollensätzen 20, 21 eingelagert wird. Die Rotorachse und die Achse der Lagereinrichtung 19 liegen horizontal und quer zur Bewegungsrichtung der Transportpalette 15, die senkrecht zur Darstellungsebene verläuft.

Die Unwuchtmeßeinrichtung 10 weist eine das Magnetfeldsystem 12, die Stützrollensätze 20, 21 und eine Schwingbrücke 24 umfassende Baueinheit auf, die über Stützfedern 22, 23 an ortsfest angeordneten Teilen der Meßstation abgestützt ist. Die Schwingungen der Baueinheit werden über nicht dargestellt Schwingungsumformer erfaßt.

Aufbau und Wirkungsweise der Unwuchtmeßeinrichtung 10 und der Hubeinrichtung 11 in Zusammenwirken mit dem Transferband 7 sind weiter oben im Zusammenhang mit der Beschreibung der Figur 1 näher erläutert. Wie weiter oben anhand der Fig. 1 näher erläutert, kann die Rotorachse auch parallel zur Bewegungsrichtung der Transportpalette 15 bzw. der Transporteinrichtung 7 angeordnet werden. Ferner können, wie ebenfalls schon näher erläutert, Unwuchtmeßeinrichtung 10 und Hubeinrichtung 11 in einer zu der Vertikalebene durch eine Rotorachse geneigten Ebene durch eine Rotorachse angeordnet werden.

Gegebenenfalls kann vorgesehen werden, daß beim Einlagerungshub des Rotors 6 in die Lagereinrichtung 19 nicht nur die Hubeinrichtung 11 bewegt, sondern auch die Unwuchtmeßeinrichtung 10 abgesenkt wird, oder daß nur die Unwuchtmeßeinrichtung 10 abgesenkt wird; diese Bewegungsmöglichkeit der Unwuchtmeßeinrichtung 10 ist durch den gestrichelt gezeichneten Pfeil 25 angedeutet. Wird nur die Unwuchtmeßeinrichtung 10 bewegt, so kommt sie beim Absenken in geringem Abstand vom Rotor 6 zum Stillstand, der dann magnetisch von der Transportpalette 15 abgehoben wird, so daß ein ungehinderter Meßlauf möglich wird.

Die Unwuchtmeßstation 1 in Figur 3 ist prinzipiell wie die zuvor beschriebenen Unwuchtmeßstationen ausgebildet, ist jedoch zur Unwuchtmessung von scheibenförmigen Rotoren 6 ohne eigene Lagerzapfen mit vertikal liegender Rotorachse ausgelegt. Die Rotoren 6 liegen ohne zwischengeschalteten Rotorträger auf dem in einer Horizontalebene angeordneten Transferband 7 auf. Die Unwuchtmeßeinrichtung 10 weist als Lagereinrichtung eine vertikal angeordnete Spindel 30 auf, auf die der Rotor 6 mittels der Hubeinrichtung 11 und/oder durch Absenken der Unwuchtmeßeinrichtung 10 mit einer zentrischen Bohrung 31 aufgebracht und während des Meßlaufs mittels mechanischer Mittel gehalten wird. Die Spindel 30 wird z. B. elektromotorisch oder durch Strömungsmittel wie Druckluft angetrieben. Es können jedoch auch andere, im Auswuchtmaschinenbau übliche Mittel eingesetzt werden; dies gilt auch für die Gestaltung weiterer Baueinheiten wie z. B. die Lagereinrichtung für den Rotor.

Bei allen zuvor beschriebenen Ausführungsformen kann anstelle der Anordnung der Transporteinrichtung 7 in einer Horizontalebene eine Anordnung unter einem Winkel zur Horizontalebene vorgesehen werden. Die mit der Transporteinrichtung 7 zusammenwirkenden Bauteile behalten dabei zweckmäßig ihre Relativlagen zur Transporteinrichtung 7.

**Patentansprüche**

1. Unwuchtmeßstation (1) mit einer eine Unwuchtmeßeinrichtung (10) durchlaufenden Transporteinrichtung (7), wobei die Unwuchtmeßeinrichtung (10) eine Lagereinrichtung für einen Rotor (6), eine Einrichtung zur Drehbewegung des Rotors (6), einen Wirkungen der Unwucht des Rotors (6) erfassenden Meßumformer, eine Einrichtung zur Erzeugung eines Bezugssignals und eine Auswerteeinrichtung für die von dem Meßumformer gelieferten Signale unter Heranziehung des Bezugssignals umfaßt und mit einer Einrichtung zur Einlagerung des Rotors (6) , dadurch gekennzeichnet, daß die Unwuchtmeßeinrichtung (10) oberhalb einer Fläche, in der die Bewegungsbahn der Transporteinrichtung (7) verläuft, angeordnet ist.

2. Unwuchtmeßstation nach Anspruch 1, dadurch gekennzeichnet, daß die Transporteinrichtung (7) im wesentlichen horizontal angeordnet ist und die Unwuchtmeßeinrichtung (10) im wesentlichen oberhalb einer Ebene, in der die Bewegungsbahn des Rotors (6) verläuft, angeordnet ist.

3. Unwuchtmeßstation nach einem der vorhergehenden Ansprüche, dadurch gekennzeichnet, daß die Unwuchtmeßeinrichtung (10) im wesentlichen vertikal oberhalb einer Stelle der im wesentlichen horizontal verlaufenden Bewegungsbahn des Rotors (6) angeordnet ist.

4. Unwuchtmeßstation nach einem der vorhergehenden Ansprüche, dadurch gekennzeichnet, daß die Transporteinrichtung (7) einen als Transportpalette (15) ausgebildeten Rotorträger (8) aufweist.

5. Unwuchtmeßstation nach einem der vorhergehenden Ansprüche, dadurch gekennzeichnet, daß als Einrichtung zur Drehbewegung des Rotors (6) und/oder zur Einlagerung des Rotors (6) in die Lagereinrichtung ein Magnetfeldsystem (12) vorgesehen ist.

6. Unwuchtmeßstation nach Anspruch 5, dadurch gekennzeichnet, daß mit dem Magnetfeldsystem (12) ein Drehfeld und/oder ein Gleichfeld erzeugbar ist.

7. Unwuchtmeßstation nach einem der vorhergehenden Ansprüche, dadurch gekennzeichnet, daß der Transport schrittweise erfolgt und daß die Lagereinrichtung und der Rotor (6) bei der Einlagerung einen Abstand zueinander aufweisen, der kleiner ist als der bei Beendigung des Transportschritts.

8. Unwuchtmeßstation nach einem der obigen Ansprüche, insbesondere nach Anspruch 7, dadurch gekennzeichnet, daß zur Einstellung des Abstandes bzw. zur Einlagerung des Rotors (6) eine Hubeinrichtung (11) für den Rotor (6) vorgesehen ist.

9. Unwuchtmeßstation nach einem der obigen Ansprüche, dadurch gekennzeichnet, daß zur Einstellung des Abstandes bzw. zur Einlagerung des Rotors (6) eine Absenkeinrichtung für die Unwuchtmeßeinrichtung (10) oder für Teile der Unwuchtmeßeinrichtung (10) vorgesehen ist.

10. Unwuchtmeßstation nach einem der vorhergehenden Ansprüche, dadurch gekennzeichnet, daß die Drehachse des Rotors (6) horizontal liegt.

11. Unwuchtmeßstation nach Anspruch 10, dadurch gekennzeichnet, daß mechanische Mittel zur Drehbewegung des Rotors (6) und als Lagereinrichtung Abstützrollen und mit diesen zusammenwirkende Gegendruckrollen vorgesehen sind.

12. Unwuchtmeßstation nach einem der vorhergehenden Ansprüche 1 bis 9, dadurch gekennzeichnet, daß die Drehachse eines im wesentlichen scheibenförmigen Rotors (6) vertikal liegt und die Unwuchtmeßeinrichtung (10) eine Lagereinrichtung in Form einer vertikalen Spindel (30) aufweist.

13. Unwuchtmeßstation nach einem der vorhergehenden Ansprüche, dadurch gekennzeichnet, daß die Unwuchtmeßstation (1) Teil einer Auswuchtanlage mit die Bewegungsbahn des Rotorträgers portalartig umgebenden Meßund/oder Bearbeitungsstationen (1, 2) ist.

14. Verfahren zur Unwuchtmessung eines auszuwuchtenden Rotors (6) in einer Unwuchtmeßstation (1) mit einer Unwuchtmeßeinrichtung (10), die eine Lagereinrichtung für den Rotor (6), eine Einrichtung zur Drehbewegung des Rotors (6), einen Wirkungen der Unwucht des Rotors (6) erfassenden Meßumformer, eine Einrichtung zur Erzeugung eines Bezugssignals und eine Auswerteeinrichtung für die von dem Meßumformer gelieferten Signale unter Heranziehung des Bezugssignals umfaßt, dadurch gekennzeichnet, daß die Unwuchtmeßeinrichtung (10) und der Rotor (6) so angeordnet werden, daß sich die Unwuchtmeßeinrichtung (10) oberhalb des Rotors (6) befindet und daß danach der Rotor (6) von der Unwuchtmeßeinrichtung (10) angehoben und gehalten wird.

## Claims

1. An unbalance measuring station (1) with a transportation device (7) passing through an unbalance measuring device (10), in which the unbalance measuring device (10) comprises a bearing device for a rotor (6), a device for the rotary movement of the rotor (6), a measurement transducer detecting effects of the unbalance of the rotor (6), a device for producing a reference signal and an evaluation device for the signals delivered by the measurement transducer while using the reference signal and having a device for bedding the rotor (6), **characterised in that** the unbalance measurement device (10) is arranged above a surface in which the movement path of the transporation device (7) runs.

2. An unbalance measuring station according to claim 1, **characterised in that** the transportation device (7) is arranged substantially horizontally and the unbalance measuring device (10) is arranged substantially above a plane in which the movement path of the rotor (6) runs.

3. An unbalance measuring station according to any one of the preceding claims, **characterised in that** the unbalance measuring device (10) is arranged substantially vertically above a point on the substantially horizontal movement path of the rotor (6).

4. An unbalance measuring station according to any one of the preceding claims, **characterised in that** the transportation device (7) has a rotor support (8) formed as a transportation pallet (15).

5. An unbalance measuring station according to any one of the preceding claims, **characterised in that** a magnetic field system (12) is provided as the device for the rotary movement of the rotor (6) and/or for the bedding of the rotor (6) into the bearing device.

6. An unbalance measuring station according to claim 5, **characterised in that** a three phase field and/or a d.c. field can be produced with the magnetic field system (12).

7. An unbalance measuring station according to any one of the preceding claims, **characterised in that** the transportation is in steps and that the bearing device and the rotor (6) have a spacing from each other during bedding which is smaller than that during termination of the transportation step.

8. An unbalance measuring station according to any one of the above claims, particularly according to claim 7, **characterised in that** a lift device (11) is provided for the rotor (6) for adjusting the spacing and/or for bedding the rotor (6).

9. An unbalance measuring station according to any one of the above claims, **characterised in that** a lowering device for the unbalance measuring device (10) or for part of the unbalance measuring device (10) is provided for adjusting the spacing and/or for bedding the rotor (6).

10. An unbalance measuring station according to any one of the preceding claims, **characterised in that** the axis of rotation of the rotor (6) is horizontal.

11. An unbalance measuring station according to claim 10, **characterised in that** mechanical means are provided for rotary movement of the rotor (6) and as bearing device support rollers and counter pressure rollers cooperating with these are provided.

12. An unbalance measuring station according to any one of the preceding claims 1 to 9, **characterised in that** the rotary axis of a substantially disc-like rotor (6) is vertical and the unbalance measuring device (10) has a bearing device in the form of a vertical spindle (30).

13. An unbalance measuring station according to any one of the preceding claims, **characterised in that** the unbalance measuring station (1) is part of a balancing system with measuring and/or processing stations (1,2) surrounding the movement path of the rotor support like a gantry.

14. A method of unbalance measurement of a rotor (6) to be balanced in an unbalance measuring station (1) with an unbalance measuring device (10), which comprises a bearing device for the rotor (6), a device for the rotary movement of the rotor (6), a measuring transducer detecting effects of the unbalance of the rotor (6), a device for producig a reference signal and an evaluation device for the signals delivered by the measuring transducer while using the reference signal, **characerised in that** the unbalance measuring device (10) and the rotor (6) are so arranged that the unbalance measurement device (10) is located above the rotor (6) and that thereafter the rotor (6) is raised and held by the unbalance measuring device.

**Revendications**

1. Station (1) de mesure de balourd comportant un dispositif de transport (7) parcourant un dispositif (10) de mesure de balourd, le dispositif de mesure de balourd (10) comprenant un dispositif d'appui pour un rotor (6), un dispositif pour faire tourner le rotor (6), un convertisseur de mesure détectant des effets de balourd du rotor (6), un dispositif pour engendrer un signel de référence et un dispositif de traitement pour les signaux fournis par le convertisseur de mesure en utilisant le signal de référence, et comportant un dispositif pour le montage du rotor (6),

caratérisée en ce que le dispositif de mesure du balourd (10) est placé au-dessus d'une surface dans laquelle est située la trajectoire de déplacement du dispositif de transport (7).

2. Station de mesure de balourd selon la revendication 1, caractérisée en ce que le dispositif de transport 7 est disposé sensiblement horizontalement et le dispositif de mesure de balourd (10) est disposé essentiellement au-dessus d'un plan dans lequel s'étend la trajectoire de déplacement du rotor (6).

3. Station de mesure de balourd selon l'une des revendications précédentes, caractérisée en ce que le dispositif de mesure de balourd (10) est disposé sensiblement verticalement au-dessus d'un emplacement de la trajectoire de déplacement du rotor (6) s'étendant sensiblement horizontalement.

4. Station de mesure de balourd selon l'une des revendications précédentes, caractérisée en ce que le dispositif de transport (7) comporte un support de rotor (8) se présentant sous la forme d'une palette de transport (15).

5. Station de mesure de balourd selon l'une des revendications précédentes, caractérisée en ce qu'il est prévu, comme dispositif pour faire tourner le rotor (6) et/ou pour le montage du rotor (6) sur palier dans le dispositif d'appui, un système à champ magnétique (12).

6. Station de mesure de balourd selon la revendication 5, caractérisée en ce qu'on peut engendrer avec le système à champ magnétique (12) un champ magnétique tournant et/ou un champ continu.

7. Station de mesure de balourd selon l'une des revendications précédentes, caractérisée en ce que le transport a lieu pas à pas, et en ce que le dispositif d'appui et le rotor (6), lorsqu'il est inséré, présentent une distance mutuelle inférieure à celle qui existe lors de l'achèvement du pas de transport.

8. Station de mesure de balourd selon l'une des revendications précédentes, en particulier selon la revendication 7, caractérisée en ce que, pour le réglage de la distance ou pour le montage du rotor (6) sur palier, on prévoit un dispositif élévateur (11) pour le rotor (6).

9. Station de mesure de balourd selon l'une des revendications précédentes, caractérisée en ce que, pour le réglage de la distance ou le montage du rotor (6) sur palier, on prévoit un dispositif d'abaissement pour le dispositif de mesure de balourd (10) ou pour des parties du dispositif de mesure de balourd (10).

10. Station de mesure de balourd selon l'une des revendications précédentes, caractérisée en ce que l'axe de rotation du rotor (6) est horizontal.

11. Station de mesure de balourd selon la revendication 10, caractérisée en ce qu'on prévoit des moyens mécaniques pour la rotation du rotor (6) et, comme dispositif d'appui, des rouleaux de soutien et des rouleaux antagonistes qui coopèrent avec eux.

12. Station de mesure de balourd selon l'une des revendications 1 à 9 qui précèdent, caractérisée en ce que l'axe de rotation d'un rotor (6) sensiblement discoïde est vertical et le dispositif de mesure de balourd (10) comporte un dispositif d'appui sous la forme d'un axe (30) vertical.

13. Station de mesure de balourd selon l'une des revendications précédentes, caractérisée en ce que la station de balourd (1) fait partie d'une installation d'équilibrage avec des stations de mesure et/ou d'usinage (1,2) embrassant la trajectoire de déplacement du support du rotor à la façon d'un portique.

14. Procédé de mesure de balourd d'un rotor (6) à équilibrer dans une station de mesure de balourd (1) comportant un dispositif de mesure de balourd (10) qui comprend un dispositif d'appui pour le rotor (6), un dispositif pour faire tourner le rotor (6), un convertisseur de mesure détectant des effets du balourd du rotor (6), un dispositif pour engendrer un signal de référence et un dispositif de traitement pour les signaux fournis par le convertisseur de mesure en utilisant le signal de référence, caractérisé en ce qu'on dispose le dispositif de mesure de balourd (10) et le rotor (6) de façon que le dispositif de mesure de balourd (10) se trouve au-dessus du rotor (6) et en ce qu'ensuite on soulève le rotor (6) dans une position écartée du dispositif de mesure de balourd (10) et on l'y maintient.

Fig. 1

Fig. 2

Fig. 3